# EUROPÄISCHE PATENTANMELDUNG

(11) **EP 1 679 001 A2**
(43) Veröffentlichungstag der Anmeldung: **12.07.2006**
(21) Anmeldenummer: 05018054.6
(22) Anmeldetag: 19.08.2005
(51) Int. Cl.: A01M 1/10

(54) **Insektenfalle**

(30) Priorität: 19.08.2004 DE 102004040408; 17.09.2004 DE 102004045313
(71) Anmelder: Stübe, Manuela, 68775 Ketsch (DE)
(72) Erfinder: Stübe, Manuela, 68775 Ketsch (DE)
(74) Vertreter: Benninger, Johannes

(57) **Zusammenfassung**

Die Erfindung betrifft eine Falle (10) für Insekten und andere Klein- und Kleinstlebewesen, insbesondere zum Fangen von Fluginsekten. Die Falle umfasst einen Auffangbehälter (20) zur Aufnahme gefangener Insekten (24) und wenigstens eine Fangvorrichtung (30) mit einer Fallöffnung (34), die ins Innere des Auffangbehälters (20) hinein ragende Seitenwandabschnitte (36) aufweist, durch die zu fangende und/oder angelockte Insekten vorzugsweise in den Auffangbehälter (20) hinein, jedoch nicht wieder hinaus gelangen können, mit wenigstens einer Befestigungseinrichtung (60) zur optionalen Anbringung eines Insektenlockmittels (62) und mit wenigstens einer Halteeinrichtung (70) zur Anbringung der wenigstens einen Fangvorrichtung (30) an dem Auffangbehälter (20).

Die wenigstens eine Halteeinrichtung (70) der wenigstens einen Fangvorrichtung (30) ist an einer Unterseite eines weitgehend ebenen Außenbereiches (32) der wenigstens einen Fangvorrichtung (30) angeordnet und weist wenigstens einen mit wenigstens einer Öffnung (25) des Auffangbehälters (20) korrespondierenden stegartigen Vorsprung (72) auf.

## Beschreibung

Die Erfindung betrifft eine Insektenfalle und Falle für Klein- oder Kleinstlebewesen, insbesondere zum Fangen von Fluginsekten, mit den Merkmalen der Oberbegriffe der unabhängigen Patentansprüche.

Das Prinzip von Falltrichterfallen zum Fangen von Insekten ist seit langem bekannt. So ist beispielsweise in der GB 365 231 A (1932) eine Falle für Wespen, Fliegen oder andere Insekten offenbart, die aus einer Metallabdeckung für ein Einmachglas besteht, in die eine trichterförmige Öffnung eingebracht ist. Eine Abdeckung über der Öffnung verhindert durch die Abdunklung der Öffnung ein Entkommen bereits gefangener Insekten. Im Inneren des Einmachglases befindet sich ein Insektenlockmittel, bspw. eine Zuckerlösung.

Weiterentwickelte Falltrichterfallen sind beispielsweise in GB 2 052 942 A, US 4 642 936 A oder US 2003/0070348 A1 veröffentlicht.

Die in der GB 2 052 942 A offenbarte Insektenfalle besteht aus einem überdachten Trichterteil mit weiter Öffnung und einem von dieser Öffnung ausgehenden, weit nach unten gezogenen und schräg nach außen verlaufenden Rand ("Rock"). An diesem ist ein Auffangbehälter an den Fangtrichter gesteckt bzw. eine Plastiktüte mittels eines elastischen Bandes befestigt. Insektenlockstoffe können in fester Form mittels Haken am Dach oder am Trichter angebracht werden.

Die US 4 642 936 A offenbart eine Insektenfalle bestehend aus Auffangbehälter, Trichter, Abdeckung bzw. Dach und Lockstoffbehälter, die unabhängig voneinander ausgeführt und mittels Steck- bzw. Schraubverbindungen zusammengefügt sind. Das Dach trägt eine käfigförmige Vorrichtung zur Befestigung verschiedener Pheromonformen direkt unterhalb des Daches.

Die in der US 2003/0070348 A1 offenbarte "Insektenköder- und -einfang-Station" besteht aus drei Teilen, die über Schlüssel-Schloss-Mechanismen relativ aufwändig und fest miteinander verbunden sind, wobei ein handelsüblicher Plastikbecher zur Aufnahme von Lockmittel und/oder Insekten zwischen einer Basis und einer Rückhaltevorrichtung (Trichter) sowie einem Deckel eingeklemmt wird. Zwischen Basis und Abdeckung erlauben seitliche Löcher ein Einkrabbeln oder Einfliegen von Insekten. Die Falle wird bevorzugt in den Boden versenkt, kann aber auch hängend oder stehend verwendet werden.

Die Veröffentlichungen GB 365 231 A, GB 2 052 942 A und US 2003/0070348 A1 beschreiben Ausführungsformen von Insektenfallen, bei denen handelsübliche Behälter wie bspw. ein Einmachglas (GB 365 231 A), eine Plastiktüte (GB 2 052 942 A) oder ein Plastikbecher (US 2003/0070348 A1) als Auffangbehälter für gefangene Insekten benutzt werden. Hierzu weisen die erwähnten Fallen relativ spezielle Vorrichtungen auf, die jeweils nur eine Befestigung an oder auf einer speziellen Art von handelsüblichem Gefäß erlaubt. Keine der beschriebenen Ausführungsformen bietet eine universelle Lösung, die eine Befestigung der Fallenvorrichtung an einem beliebigen Auffangbehälter ermöglicht. Zudem bestehen die meisten der beschrieben Insektenfallen aus mehreren Teilen, die über relativ aufwändige Vorrichtungen miteinander verbunden sind. Die Überprüfung des Fangerfolgs, für die im Allgemeinen ein Abnehmen oder zumindest Anheben des Deckels erforderlich ist, sowie das Auswechseln der Auffangbehälter und der Lockmittel gestalten sich schwierig. Die Fallen sind nicht durch Zusatzteile ausbaubar.

Der vorliegenden Erfindung liegt die Aufgabe zugrunde, eine Insektenfalle und Falle für Klein- oder Kleinstlebewesen zur Verfügung zu stellen, die universell einsetzbar ist und eine Vielzahl von handelsüblichen Behältnissen als Auffangbehälter nutzbar machen kann. Dabei soll sie einfach gestaltet, unaufwändig bedienbar und jederzeit erweiterbar sein.

Diese Aufgaben werden erfindungsgemäß durch die kennzeichnenden Merkmale der unabhängigen Patentansprüche gelöst, sowie durch die Merkmale der abhängigen Ansprüche vorteilhaft weitergebildet.

Eine erfindungsgemäße Falle, insbesondere zum Fangen von Fluginsekten, umfasst einen Auffangbehälter zur Aufnahme gefangener Insekten und wenigstens eine Fangvorrichtung mit einer Fallöffnung, die ins Innere des Auffangbehälters hinein ragende Seitenwandabschnitte aufweist, durch die zu fangende und/oder angelockte Insekten vorzugsweise in den Auffangbehälter hinein, jedoch nicht wieder hinaus gelangen können, mit wenigstens einer Befestigungseinrichtung zur optionalen Anbringung eines Insektenlockmittels und mit wenigstens einer Halteeinrichtung zur Anbringung der wenigstens einen Fangvorrichtung an dem Auffangbehälter. Es ist vorgesehen, dass die wenigstens eine Halteeinrichtung der wenigstens einen Fangvorrichtung an einer Unterseite eines weitgehend ebenen Außenbereiches der wenigstens einen Fangvorrichtung angeordnet ist und wenigstens einen mit einer Öffnung des Auffangbehälters korrespondierenden stegartigen Vorsprung aufweist.

Alternativ umfasst eine erfindungsgemäße Insektenfalle, insbesondere zum Fangen von Fluginsekten, einen Auffangbehälter zur Aufnahme gefangener Insekten und wenigstens eine Fangvorrichtung mit einer Fallöffnung, die ins Innere des Auffangbehälters hinein ragende Seitenwandabschnitte aufweist, durch die zu fangende und/oder angelockte Insekten vorzugsweise in den Auffangbehälter hinein, jedoch nicht wieder hinaus gelangen können, mit wenigstens einer Befestigungseinrichtung zur optionalen Anbringung eines Insektenlockmittels, wobei vorgesehen ist, dass die wenigstens eine Fangvorrichtung in eine korrespondierende Öffnung des Auffangbehälters einsetzbar bzw. auf eine korrespondierende Öffnung des Auffangbehälters aufsetzbar und mittels einer Abdeckung, die eine Öffnung aufweist, fixierbar ist.

Der Auffangbehälter der erfindungsgemäßen Insektenfalle kann jeder beliebige Behälter sein, dessen Material und Form sich für die Aufnahme von gefangenen Insekten eignet und der wenigstens eine genügend große Öffnung zum Einsatz der Fangvorrichtung und zum Durchtritt von Insekten aufweist. Bevorzugt weist zumindest die wenigstens eine Öffnung des Behälters ein übliches Standardmaß auf. Auch die Verwendung von nicht standardisierten Gefäßen wie bspw. Vasen, Trinkgläsern, Eimern etc. ist erfindungsgemäß möglich. Alternativ kann der Auffangbehälter wenigstens eine mit einem Deckel verschließbare Öffnung aufweisen, wobei der Deckel wiederum wenigstens eine Öffnung mit einem kleineren Durchmesser aufweist, in den die erfindungsgemäße Fangvorrichtung eingesetzt werden kann. Die wenigstens eine Öffnung im Auffangbehälter kann nach oben, zur Seite oder nach unten gerichtet sein, also sowohl in einem Deckel bzw. in einer Deckfläche oder in einer Seitenwand oder in einer Bodenfläche des Auffangbehälters eingebracht sein. Die Form der wenigstens einen Öffnung im Auffangbehälter sollte mit der Form und Größe wenigstens einer Halteeinrichtung der Fangvorrichtung korrespondieren.

Ein Auffangbehälter zur Verwendung im Rahmen der erfindungsgemäßen Insektenfalle kann auch speziell angefertigt sein und als Zusatzteil angeboten werden. Ein derartiger Auffangbehälter weist bevorzugt wenigstens eine gerade Seitenfläche bzw. einen geraden Abschnitt an einer Seitenfläche auf, an der eine Befestigung an einer geraden Fläche, bspw. einer Wand, einer Innenseite eines Mülleimerdeckels, einer Mülleimerseite etc. möglich ist. Hierzu können unterschiedliche Vorrichtungen wie Wandhaken, Winkel, Klettbänder etc. zur Befestigung an einer Fläche bereits am Auffangbehälter vorinstalliert sein bzw. durch entsprechende Vorrichtungen wie Einstecköffnungen, Einsteckhaken, Ösen etc. auf einfache Weise anbringbar sein.

Der Auffangbehälter kann an einer Innenseite wenigstens eine Klammer und/oder Klips und/oder Spange und/oder Haken und/oder eine ähnliche Vorrichtung aufweisen, mittels derer ein Insektenlockmittel in einer beliebigen festen Ausführungsform, bspw. Plättchen, Gummihütchen, Plastikkapsel etc., anbringbar ist.

Der Auffangbehälter kann mit einer Flüssigkeit, bspw. Wasser und/oder einer insektizidhaltigen Flüssigkeit und/oder Essigwasser und/oder Fruchtsaft und/oder einem anderen flüssigen Insektenlockmittel befüllt sein, um ein Entkommen von gefangenen Insekten zu verhindern bzw. die Lockwirkung der Falle zu erhöhen. Alternativ kann wenigstens eine Innenfläche des Auffangbehälters mit einem insektiziden und/oder Insekten anlockenden Mittel behandelt, bspw. besprüht sein. Alternativ kann ein gasförmiges bzw. leicht flüchtiges Insektizid und/oder Insekten anlockendes Mittel im Auffangbehälter gelagert sein und bspw. durch die Fangöffnung ausgasen. Sowohl Insektizid als auch Lockstoff können in einer Ausführungsform auf Gelbasis im Auffangbehälter gelagert sein.

Die Innenfläche und/oder ein Bereich der Innenfläche des Auffangbehälters kann mit einer Beschichtung versehen sein bzw. aus einem Material gefertigt sein, das ein Abgleiten von Insekten fördert und ein Entkommen gefangener Insekten erschwert.

Die Fangvorrichtung der erfindungsgemäßen Insektenfalle besteht aus einer im Außenbereich weitgehend planen Fläche, in die eine Öffnung eingebracht ist. Von dieser Öffnung ausgehend ragen Seitenwandabschnitte aus der Ebene heraus, die im betriebsbereiten Zustand der Insektenfalle ins Innere des Auffangbehälters hinein ragen. Die Öffnung ist somit im weitesten Sinne trichterförmig ausgebildet. Angelockte Insekten können durch diese Öffnung in den Auffangbehälter hinein gelangen, ein Entkommen ist jedoch sehr erschwert. Im Folgenden wird diese Öffnung auch als Fallöffnung bezeichnet. Der Rand der Fallöffnung in der Fangvorrichtung und die ins Falleninnere ragenden Anteile der Fallöffnung können jede beliebige Form aufweisen, bspw. können sie kreisförmig, oval, quadratisch, recht- oder vieleckig sein.

Die ins Innere der Falle ragenden Seitenwandabschnitte der Fallöffnung können schräg oder gerade nach innen weisen. Sie können bspw. kegelstumpfförmig und somit wie ein üblicher Trichter oder pyramidenstumpfförmig ausgebildet sein. Sie können aber auch zylindrisch ins Innere des Auffangbehälters hineinragen. Die ins Innere des Auffangbehälters hinein ragenden Seitenwandabschnitte können nach innen gewölbt sein, so dass bspw. ein kegelstumpfförmiger Öffnungsabschnitt in einen zylindrischen Öffnungsabschnitt oder ein pyramidenstumpfförmiger Öffnungsabschnitt in einen quaderförmigen Öffnungsabschnitt übergeht und somit das Hineinfallen von Insekten gefördert wird. Die Seitenwände der Fallöffnung können mit einer Beschichtung versehen sein bzw. aus einem Material gefertigt sein, so dass ein Festhalten der Insekten an den Seitenwänden erschwert ist, um den Fangerfolg zu erhöhen. Die Beschichtung kann zudem einen Insektenlockstoff aufweisen. Außerdem kann die Beschichtung ein Insektizid aufweisen, um bereits angelockte und noch nicht gefangene Insekten abzutöten. Das Insektizid kann sich auch innerhalb der Falle befinden und durch die Fallöffnung ausgasen. Die ins Innere des Auffangbehälters hinein ragenden Seitenwandabschnitte können ovale und/oder runde und/oder schlitzförmige und/oder rechteckige und/oder quadratische Durchbrüche aufweisen. Sie können bspw. auch aus einem netzartigen Material gefertigt sein. Hierdurch wird eine verbesserte Freisetzung von im Falleninneren angebrachten Lockstoffen und damit eine verbesserte Lockwirkung bzw. ein besseres Ausgasen von sich im Falleninneren befindlichem flüchtigem Insektizid erreicht.

Die Fallöffnung der Fangvorrichtung sollte einen Durchmesser von mindestens 1,5 cm, bevorzugt 4 cm oder größer aufweisen. Die Fläche der Fallöffnung beträgt bevorzugt 800 mm² oder mehr, da hierdurch eine größere Fläche zur Verdunstung eines im Falleninneren angeordneten Insektenlockstoffs zur Verfügung steht und die Fangkapazität der Falle steigt.

Die Seitenwandabschnitte der Fallöffnung sollten wenigstens 2 cm weit, bevorzugt 4 cm weit oder noch weiter aus der Ebene der Fangvorrichtung heraus und somit im betriebsbereiten Zustand der Falle 2 cm tief, bevorzugt 4 cm tief oder noch tiefer in das Falleninnere hinein ragen. Das Entkommen von bereits gefangenen Insekten ist hierdurch erschwert. Falls die erfindungsgemäße Insektenfalle mit einem Deckel ausgestattet ist, reicht eine geringe Trichtertiefe von weniger als 0,5 cm aus, um Insekten zurückzuhalten.

Zur Verbesserung der Verdunstung von im Falleninneren befindlichem Insektenlockstoff kann die Fallöffnung schräg in die weitgehend plane Fläche der Fangvorrichtung eingebracht sein.

An der im betriebsbereiten Zustand dem Auffangbehälter zugewandten Seite der Fangvorrichtung und somit im Falleninneren befindet sich erfindungsgemäß wenigstens eine Befestigungseinrichtung zur Anbringung eines Insektenlockmittels. Diese besteht aus wenigstens einer Klammer und/oder Klips und/oder Spange und/oder Haken und/oder einer ähnlichen Vorrichtung, mittels derer Insektenlockmittel in unterschiedlichen Ausführungsformen, bspw. Plättchen, Gummihütchen, Plastikkapseln etc., anbringbar sind. Durch das Vorhandensein mehrerer derartiger Befestigungseinrichtung lassen sich verschiedene Formen von Insektenlockmitteln (bspw. Plättchen, Gummihütchen, Plastikkapseln) und verschiedene Arten von Insektenlockmitteln (bspw. unterschiedliche Pheromone, Lactatpräparate etc.) kombinieren. Die wenigstens eine Befestigungseinrichtung zur Anbringung eines Insektenlockmittels kann an der Unterseite des weitgehend plan gestalteten Außenbereiches der Fangvorrichtung angeordnet sein. Sie kann auch im Bereich der weitgehend trichterförmigen Fallöffnung bzw. an einer Innenseite eines ins Innere des Auffangbehälters ragenden Seitenwandabschnittes der Fallöffnung in der Fangvorrichtung angeordnet sein. Gemäß einer bevorzugten Ausführungsform der vorliegenden Erfindung ist mit geringem Abstand zur weitgehend trichterförmigen Fallöffnung in der Fangvorrichtung wenigstens eine ins Falleninnere weisende Haltezunge an der Innenseite des weitgehend planen Außenbereichs der Fangvorrichtung angeordnet. Am unteren, am weitesten in den Auffangbehälter hinein ragenden Ende der Haltezunge befindet sich eine Haltenase, bspw. in Form einer Verdickung. Gegenüber dieser Haltenase ist an der Innenseite eines Seitenwandabschnittes der Öffnung eine weitere Haltenase, bspw. in Form einer Verdickung, angeordnet. Durch die Flexibilität und Elastizität der wenigstens einen Haltezunge kann Insektenlockstoff zwischen die beiden Haltenasen eingeschoben und dort festgehalten werden. Die wenigstens eine Haltezunge kann zur Verbesserung ihrer Festhalteeigenschaften eine geriffelte Oberfläche aufweisen. Des Weiteren kann sie eine Abschrägung am unteren Ende aufweisen, die ein Einschieben von Lockstoff erleichtert. In den zuletzt genannten Ausführungsformen sind keine Haltenasen erforderlich.

Die Fangvorrichtung der erfindungsgemäßen Insektenfalle weist erfindungsgemäß wenigstens eine Halteeinrichtung zur Anbringung der Fangvorrichtung am Auffangbehälter auf. Die wenigstens eine Halteeinrichtung der Fangvorrichtung besteht aus wenigstens einem, an der Unterseite der nahezu planen Außenfläche der Fangvorrichtung angeordneten und somit im betriebsbereiten Zustand der Insektenfalle ins Falleninnere weisenden, stegartigen Vorsprung. Bevorzugt ist der wenigstens eine stegartige Vorsprung als Ring ausgebildet. Der wenigstens eine Haltering kann Unterbrechungen aufweisen, so dass die Halteeinrichtung aus mehreren bis minimal zwei auf einer Kreisbahn angeordneten Einzelstegen besteht. Alternativ kann der Haltesteg auch jede andere geometrische Form aufweisen, bspw. kann er oval, quadratisch, recht- oder vieleckig sein. In jeder Form ist es auch denkbar, dass der Haltesteg derart unterbrochen ist, dass sich die Halteeinrichtung aus mehreren, minimal zwei Einzelstegen zusammensetzt, die auf einer beliebig geformten Bahn angeordnet sind. Besonders bevorzugt umfasst die wenigstens eine Halteeinrichtung vier Einzelstege, die gleichmäßig verteilt auf einer Kreisbahn oder einer oval verlaufenden Bahn angeordnet sind; mittels einer derartigen Anordnung ist eine Befestigung auf bzw. in einer kreisförmigen bzw. ovalförmigen Öffnung ebenso möglich wie eine Befestigung auf bzw. in einer quadratischen bzw. rechteckigen Öffnung des Auffangbehälters. Zudem ermöglicht diese Anordnung der Einzelstege einen Differenzausgleich bzw. ein leicht schräges Einsetzen der Fangvorrichtung innerhalb der Öffnung des Auffangbehälters.

Die Haltestege können an ihren Unterkanten Befestigungseinrichtungen, bspw. Haltenasen oder Rasthaken oder Gewinde oder gewindekompatible, etwas schräg angeordnete Haken, aufweisen.

Bevorzugt weist die erfindungsgemäße Fangvorrichtung mehrere der beschriebenen Halteeinrichtungen auf. Diese können unterschiedliche Befestigungsringe mit unterschiedlichen Durchmessern sein. Alternativ können unterschiedliche Befestigungsstege mit unterschiedlichen Formen und Größen an der Fangvorrichtung angeordnet sein, wobei jede beliebige Kombination von Formen und Größen denkbar ist. Besonders bevorzugt sind die inneren Befestigungsstege kürzer ausgebildet, ragen also weniger weit aus der Ebene heraus, als die außen liegenden Stege. Bei mehr als zwei vorhandenen Halteeinrichtungen weisen diese bevorzugt von innen nach außen ansteigend gestufte Stegtiefen auf, so dass die Zugänglichkeit jeder Halteeinrichtung auch beim Einsatz der Fangvorrichtung in eine ebene Fläche, bspw. eine großflächige Abdeckung eines großen Auffangbehälters, sichergestellt ist. Alternativ kann die Tiefe der Haltestege auch von außen nach innen abnehmen. Eine solche Abstufung kann bspw. bei einer Befestigung der Fangvorrichtung durch Aufschrauben der Haltestege auf ein Gewinde an einer Öffnung in einem Auffangbehälter von Vorteil sein.

Jeder der vorhandenen Befestigungsringe und/oder anders geformten Befestigungsstege und/oder auf einer gemeinsamen Kreis- oder andersartig geformten Bahn liegenden Einzelstege ermöglicht ein Einlegen und/oder Einstecken und/oder Einspannen auf bzw. in eine Öffnung eines Auffangbehälters oder einen Deckel oder eine ausgeschnittene, ausgestanzte oder anderweitig erzeugte Öffnung in einem Deckel eines Auffangbehälters.

Bevorzugt entsprechen die erfindungsgemäßen Halteeinrichtungen Standardnormen bezüglich ihrer Größe und Form. Auf diese Weise sind Auffangbehälter mit standardisierten Öffnungsabmaßen optimal an der Fangvorrichtung anbringbar. Auf nicht standardisierte Auffangbehälter bzw. Auffangbehälter mit nicht standardisierten Öffnungsabmaßen kann die erfindungsgemäße Insektenfalle eventuell nicht aufgesteckt und/oder aufgespannt oder anderweitig befestigt, in jedem Fall aber aufgelegt werden. Durch Ausstanzen, Ausschneiden oder anderweitiges Erzeugen einer entsprechend geformten Öffnung, bspw. in einem Deckel des Auffangbehälters, kann die erfindungsgemäße Insektenfalle auch bspw. auf einem nicht genormten Auffangbehälter bspw. durch Einstecken und/oder Einspannen fest installiert werden.

Es ist weiterhin möglich, mehrere der erfindungsgemäßen Fangvorrichtungen in einen Deckel eines großen Aufnahmebehälters einzubringen. Hierzu werden mehrere entsprechende Öffnungen in eine großflächige Abdeckung eines großen Behälters, bspw. eines handelsüblichen 10 I Eimers oder eines noch größeren Behälters, eingebracht und jeweils eine Fangvorrichtung eingesetzt. Diese Einsatzvariante eignet sich vor allem bei großem Insektenbefall oder für den Fall, dass eine häufige Überprüfung der Falle bzw. ein Leeren oder Auswechseln des Aufnahmebehälters über eine längere Zeit hinweg nicht sichergestellt werden kann.

Alternativ ist die wenigstens eine Halteeinrichtung der Fangvorrichtung bestehend aus wenigstens einem entsprechenden stegartigen Vorsprung an der Oberseite der nahezu planen Außenfläche der Fangvorrichtung angeordnet. In dieser Ausführungsform kann die Fangvorrichtung von innen in eine Öffnung in einem Auffangbehälter bzw. in eine Öffnung in einer Abdeckung eines Auffangbehälters eingesetzt werden.

In einer weiteren bevorzugten Ausführungsform der erfindungsgemäßen Insektenfalle ist die Fangvorrichtung an einem Auffangbehälter befestigt, indem sie mit ihrem weitgehend planen Außenbereich um die weitgehend trichterförmige Fallöffnung herum von außen auf den Rand einer Öffnung eines beliebigen, in der Größe passenden Auffangbehälters aufgelegt bzw. in eine entsprechend geformte Öffnung in einem Auffangbehälter eingelegt wird und anschließend von oben durch eine Fixierungsvorrichtung befestigt wird. Der Auffangbehälter kann bspw. ein Schraubdeckelgefäß sein, so dass die Fangvorrichtung durch Aufschrauben des zum Behälter gehörenden Deckels, in den zuvor eine entsprechend große Öffnung eingebracht wurde, fixiert wird. Die Öffnung in dem Schraubdeckel muss hierbei so groß gewählt sein, dass die weitgehend trichterförmige Fallöffnung der Fangvorrichtung vollständig zugänglich ist, und weiterhin eventuell vorhandene sonstige Vorrichtungen an der Fangvorrichtung wie Aufhängeeinrichtung, Dachbefestigungseinrichtung etc zugänglich sind. Bei dieser Befestigungsweise wird die Fangvorrichtung zwischen Auffangbehälter und Deckel eingeklemmt, liegt also von innen am Deckel des Auffangbehälters an. Alternative Befestigungsweisen der Fangvorrichtung mittels einer Abdeckung, die eine entsprechend große und geformte Öffnung aufweist, sind denkbar, bspw. Aufstecken oder Aufklemmen einer derartigen Abdeckung mittels einer Metallspange. Auch ein Überspannen der Fangvorrichtung mit einer mit wenigstens einem entsprechenden Durchlass versehenen Folie ist möglich.

Die Fangvorrichtung kann alternativ ohne die Beteiligung einer Abdeckung mittels eines anders gearteten Zusatzteils von außen an der Öffnung des Auffangbehälters fixiert werden, bspw. durch wenigstens eine direkt an der Fangvorrichtung angreifende Spange, Klemme, o. ä. Auch die Fixierung von außen mittels eines an der Fangvorrichtung angeordneten Gewindes, einer Steckverbindung o. ä. ist möglich. In einer derartigen Ausführungsform kann die erfindungsgemäße Fangvorrichtung in eine entsprechende Öffnung in einer beliebig größeren Abdeckung von innen her eingesetzt und von außen fixiert werden.

Die wenigstens eine Halteeinrichtung der Fangvorrichtung ist bevorzugt flexibel bzw. elastisch gestaltet, um eine optimale Anpassung der wenigstens einen Halteeinrichtung an unterschiedliche Auffangbehälter sicherzustellen. Dies wird beispielsweise durch die Verwendung eines elastischen Materials, bspw. eines elastischen Kunststoffes, bzw. durch eine Ausführungsform mit Einzelstegen, wie sie bereits beschrieben wurde, erreicht.

Der weitgehend plane Außenbereich der Fangvorrichtung, an dem die wenigstens eine Halteeinrichtung angeordnet ist, ist bevorzugt flexibel bzw. elastisch gestaltet, um eine optimale Anpassung der Fangvorrichtung an unterschiedliche Auffangbehälter sicherzustellen. Dies wird beispielsweise durch die Verwendung eines elastischen Materials, bspw. eines elastischen Kunststoffes, erreicht. Alternativ kann der weitgehend plane Außenbereich der Fangvorrichtung ein bis mehrere Durchbrüche und/oder Einkerbungen aufweisen. Die Außenkontur des weitgehend planen Außenbereichs der Fangvorrichtung kann kreisförmig, oval, quadratisch, rechteckig, dreieckig oder andersartig geformt sein, um eine optimale Befestigung der Fangvorrichtung auf jeweils entsprechenden Auffangbehältern sicher zu stellen. Bspw. kann es zweckmäßig sein, bei Befestigung einer erfindungsgemäßen Fangvorrichtung auf einer quaderförmigen Schachtel eine quadratische oder rechteckige Fangvorrichtung zu verwenden, da eine runde Fangvorrichtung eventuell die Seitenkanten der Schachtel überragt.

Erfindungsgemäß ist die Fangvorrichtung leicht entfernbar am Auffangbehälter angebracht, so dass das Innere des Auffangbehälters jederzeit leicht einsehbar und erreichbar bleibt, bspw. um den Füllstand des Auffangbehälters zu prüfen oder Insektenlockmittel auszuwechseln, bzw. damit ein Leeren oder Auswechseln des Auffangbehälters auf einfache Art und Weise erfolgen kann. Alternativ kann die Fangvorrichtung wegklappbar, kippbar oder verformbar gestaltet sein.

Die Fangvorrichtung ist an ihrer Oberseite gerade gehalten und kann mit Löchern, Aussparungen, Ösen, Vertiefungen, Nuten etc. versehen sein, um einen Ausbau mit weiteren Teilen zu ermöglichen.

Erfindungsgemäß ist die mögliche Anbringung einer Fallenaufhängevorrichtung an der Fangvorrichtung vorgesehen. Die Aufhängevorrichtung ist bevorzugt an der Fangvorrichtung angeordnet, um die universelle Nutzbarkeit der erfindungsgemäßen Insektenfalle zu erhalten. Eine Aufhängevorrichtung kann bspw. durch eine an wenigstens einer an der Oberseite der Fangvorrichtung angeordneten Öse befestigte Schnur, Draht o. ä. gebildet werden.

Erfindungsgemäß ist weiterhin die mögliche Anbringung eines Daches über der Fallöffnung an der Fangvorrichtung vorgesehen. Ein Dach schützt das Falleninnere vor Regen, Schmutz, etc., so dass die Falle auch im Freien verwendet werden kann. Zudem erschwert eine Abdunklung der Fallöffnung von außen ein Entkommen bereits gefangener Insekten. Der dunkle Spalt, der durch Dach und Oberfläche der Fangvorrichtung gebildet wird, ist zudem ein Lockmittel für viele Insekten.

An der Unterseite des Daches kann erfindungsgemäß wenigstens eine Klammer und/oder Klips und/oder Spange und/oder Haken und/oder eine ähnlichen Vorrichtung angeordnet sein, mittels derer ein Insektenlockmittel in einer beliebigen festen Ausführungsform, bspw. Plättchen, Gummihütchen, Plastikkapsel etc., anbringbar ist.

Zur Befestigung an der Fangvorrichtung weist das Dach beispielsweise Abstandhalter mit an deren Ende liegenden Einsteckzungen und/oder Haltenasen, bspw. in Form von Verdickungen, oder Rasthaken auf. Die Einsteckzungen bzw. Haltenasen bzw. Rasthaken können bspw. in eine Nut oder Ringnut an der Innenseite des oberen Randes der Fallöffnung oder in entsprechende Aufnahmen an der Oberseite des flächigen Außenbereiches der Fangvorrichtung eingesteckt werden. Alternativ kann das Dach über Zubehörteile an der Fangvorrichtung anbringbar sein. Ein derartiges Zubehörteil kann bspw. ein auf die Fangvorrichtung aufsteckbarer Abstandhalter sein, der eine Öffnung zum Einhängen eines Daches aufweist, wobei das Dach einen entsprechenden, mit der Öffnung im Abstandhalter korrespondierenden Vorsprung aufweist. Die Öffnung im Abstandhalter kann dabei schlitzförmig gestaltet und oben erweitert sein, so dass ein Einstecken das Dachvorsprungs nur im oberen Bereich der schlitzförmigen Öffnung erfolgen kann, und das Absenken des Daches und damit des Vorsprungs in der Öffnung eine Fixierung der Anordnung bewirkt. Das Dach kann in dieser Ausführungsform nach oben und unten geschoben werden bzw. einfach herausgenommen werden, um das Falleninnere bzw. die Innenseite des Daches leicht zugänglich zu machen. Alternativ kann das Dach Löcher aufweisen, durch die Schnüre, Drähte o. ä. einer erfindungsgemäßen Fallenaufhängevorrichtung geführt sind. Auch in dieser Ausführungsform ist das Dach an der Schnur, dem Draht o. ä. entlang nach oben und unten verschiebbar. Ein bspw. am Dach befestigter Abstandhalter sorgt dafür, dass das Dach nicht auf der Fallöffnung aufliegen kann. Alternativ kann das Dach klappbar, kippbar oder verformbar an der Fangvorrichtung befestigt sein, um die Zugänglichkeit des Falleninneren bzw. der Deckelunterseite und somit des Insektenlockmittels zu gewährleisten.

Zwischen einem eventuell vorhandenen Dach und der Fallöffnung bzw. oberhalb der Fallöffnung der Fangvorrichtung können Einfluglöcher, z.B. Ritzen, Spalten, Netze, Löcher oder anderweitige Durchbrüche angeordnet sein, die zur Fallöffnung führen und zusätzlich anziehend für Insekten wirken.

Gemäß einer bevorzugten Ausführungsform der Erfindung setzt sich die Fangvorrichtung aus mehreren, ineinander passenden Bauteilen, bspw. Ringen zusammen. Ein zentral angeordnetes Bauteil ist hierbei mit der erfindungsgemäßen Fallöffnung ausgestattet. Um dieses Bauteil herum können ein bis mehrere Zusatzbauteile gesteckt, geschraubt, gespannt oder anderweitig befestigt werden, wobei die Anordnung der Teile weitgehend konzentrisch erfolgt. Jedes dieser Zusatzbauteile kann dabei wenigstens eine erfindungsgemäße Halteeinrichtung und/oder eine sonstige Zusatzfunktion wie Aufhängevorrichtung, Dachbefestigungsvorrichtung etc. tragen. Alternativ kann jedes dieser Zusatzbauteile wenigstens eine Befestigungsvorrichtung zur lösbaren Anbringung eines funktionalen Zusatzelementes wie bspw. eine Halteeinrichtung, eine Aufhängevorrichtung, eine Dachbefestigungsvorrichtung, etc. aufweisen. Bspw. können die weitgehend konzentrisch ineinander passenden Zusatzbauteile jeweils wenigstens eine Aussparung aufweisen, in die bspw. wenigstens ein Rasthaken eines funktionalen Zusatzelements eingreifen kann. Ein derartiges Baukastenprinzip ermöglicht ein individuelles Zusammenstellen der erfindungsgemäßen Insektenfalle in alle Raumdimensionen. Ein Anpassen der Fangvorrichtung an jeden beliebigen Auffangbehälter sowie an jede beliebige Fangsituation ist einfach und sehr variabel durchführbar.

Die Fangvorrichtung bzw. Einzelbauteile der Fangvorrichtung bzw. Zusatzbauteile der Fangvorrichtung sind bevorzugt Spritzgussteile, bevorzugt Spritzgusskunststoffteile. Auch andere Materialien, wie bspw. Keramik, Glas, etc. sind verwendbar. Dabei können auch die Erscheinungsbilder der verwendeten Materialien variieren. Sie können durchsichtig klar oder durchsichtig trüb oder undurchsichtig sein; dabei können sie jeweils auch eingefärbt bzw. lackiert sein. Insbesondere der Auffangbehälter kann undurchsichtig und/oder lackiert sein, damit bereits gefangene Insekten verborgen sind. Hierbei ist es bspw. Denkbar, dass die Insektenfalle eine Oberfläche aufweist, die durch Bemalen, Bekleben etc. vom Nutzer selbst gestaltet werden kann.

Die erfindungsgemäße Insektenfalle ist bevorzugt zum Fangen von Fluginsekten geeignet. Insbesondere durch eine große Variabilität in ihrem Aufbau ist sie jedoch auch zum Fangen anderer, bspw. kriechender Insekten wie bspw. Schaben und/oder zum Fangen anderer Kleinstlebewesen einsetzbar. Bspw. kann eine erfindungsgemäße Falle auch im Boden versenkt eingesetzt werden.

Die Erfindung wird nun anhand von beispielhaften Ausführungsformen mit Bezug auf die beiliegenden Figuren näher erläutert.

Es zeigen:
Fig. 1 eine schematische Querschnittdarstellung einer erfindungsgemäßen Insektenfalle mit aufklappbarem Dach und Insektenlockmittelbefestigung an der Innenseite des Daches,
Fig. 2 eine schematische Querschnittdarstellung einer erfindungsgemäßen Insektenfalle mit einhängbarem und senkrecht verschiebbaren Dach und Insektenlockmittelbefestigung an der Innenseite des Daches,
Fig. 3 eine Prinzipdarstellung einer erfindungsgemäßen Halterung für ein Dach gemäß Fig. 2,
Fig. 4 eine Draufsicht auf eine erfindungsgemäße Insektenfalle nach Fig. 2, ohne Dach,
Fig. 5 eine schematische Querschnittdarstellung einer erfindungsgemäßen Fangvorrichtung nach Baukastenprinzip,
Fig. 6 eine schematische Querschnittdarstellung einer alternativen Ausführungsform einer erfindungsgemäßen Insektenfalle mit aufsteckbarem Dach und Insektenlockmittelbefestigung an einer an der Seitenwand der Fallöffnung angeordneten Klemmvorrichtung und
Fig. 7 eine Perspektivenansicht einer erfindungsgemäßen Nutzung von erfindungsgemäßen Fangvorrichtungen, bei der mehrere erfindungsgemäße Fangvorrichtungen in einen Deckel eines Eimers eingebracht sind.

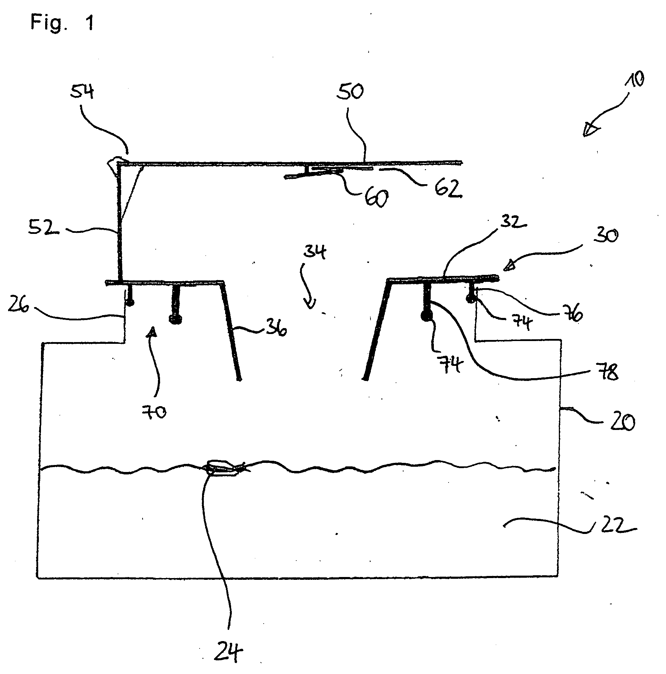

In Fig. 1 zeigt eine schematische Querschnittdarstellung einer erfindungsgemäßen Insektenfalle 10 mit aufklappbarem Dach 50 und Insektenlockmittelbefestigung 60 an der Innenseite des Daches 50. Die Insektenfalle 10 setzt sich zusammen aus einem Auffangbehälter 20 und einer Fangvorrichtung 30. Die Fangvorrichtung 30 weist einen weitgehend planen Außenbereich 32 sowie eine trichterförmige Fallöffnung 34 auf, deren Seitenwandabschnitte 36 ins Falleninnere bzw. in den Auffangbehälter 20 hinein ragen. An der Fangvorrichtung 30 ist über der Fallöffnung 34 mittels eines Abstandhalters 52 ein Dach 50 befestigt. Dieses ist mittels einer Klappvorrichtung 54 aufklappbar. An der Innenseite des Daches 50 befindet sich eine klammerartige Befestigungseinrichtung 60 für ein Insektenlockmittel 62. Dadurch angelockte Insekten, vorwiegend Fluginsekten, fliegen oder krabbeln in den Spalt zwischen Dach 50 und Oberseite der Fangvorrichtung 30 hinein und fallen durch die Fallöffnung 34 hindurch in den Auffangbehälter 20. Dieser ist mit etwas Wasser oder einer anderen, evtl. insektiziden und/oder Insekten anlockenden Flüssigkeit 22 gefüllt, um ein Entkommen von gefangenen Insekten 24 zu verhindern. Der Klappmechanismus 54 am Dach 50 ermöglicht ein einfaches Austauschen des Insektenlockmittels 62, wenn seine Wirksamkeit mit der Zeit nachlässt.

An der dem Auffangbehälter 20 zugewandten Seite der Fangvorrichtung 30 weist diese an ihrem weitgehend planen Außenbereich 32 zwei Halteeinrichtungen zur Befestigung der Fangvorrichtung 30 am Auffangbehälter 20 in Form von zwei stegartig hervorstehenden Halteringen 76, 78 mit unterschiedlichen Durchmessern auf. An ihren Rändern weisen die Halteringe 76, 78 jeweils Verdickungen 74 auf. Im dargestellten Beispiel ist die Fangvorrichtung 30 mit dem äußeren Haltering 76 mit größerem Durchmesser in die Öffnung des Aufnahmebehälters 20 eingesteckt bzw. durch die Verdickung 74 am Rand des Halterings 76 in die Öffnung des Aufnahmebehälters 20 eingeklemmt. Die Verdickungen 74 an den Rändern der Halteringe 76, 78 können auch entfallen bzw. andersartig gestaltet sein, bspw. in Form von Haken.

Alternativ könnte die dargestellte Fangvorrichtung 30 auf einen Auffangbehälter mit einer kleineren, mit dem Durchmesser des inneren Halterings 78 korrespondierenden Öffnung aufgesteckt werden. Um die Zugänglichkeit des inneren Halterings 78 in jedem Fall - auch bei einer Aufnahmebehälteröffnung in einer ebenen Fläche und ohne Öffnungshals 26 - zu gewährleisten, ragt der innere Haltering 78 etwas weiter aus der Ebene der Fangvorrichtung 30 heraus als der äußere Haltering 76.

Die Halteringe 76, 78 müssen nicht notwendigerweise einen durchgehenden Verlauf aufweisen. Beispielsweise können auch jeweils drei oder vier im Querschnitt mit dem dargestellten Querschnitt der Halteringe identische Klemmstege, die jeweils auf einer Kreisbahn mit entsprechendem Durchmesser angeordnet sind, die Halteeinrichtung 70 bilden.

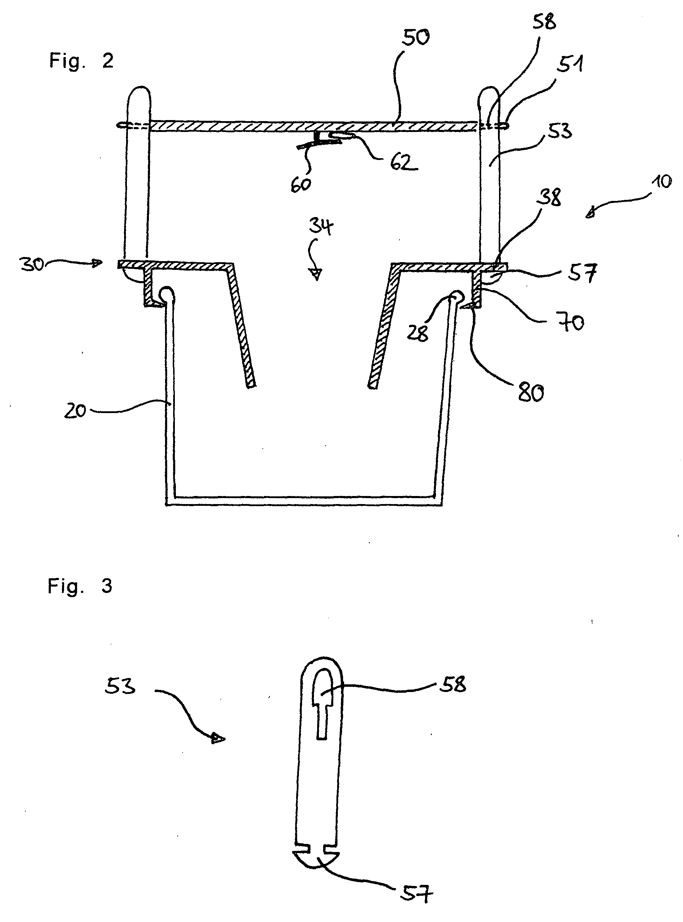

Fig. 2 zeigt eine schematische Querschnittdarstellung einer alternativen Ausführungsform der erfindungsgemäßen Insektenfalle 10. Die erfindungsgemäße Fangvorrichtung 30 weist eine trichterförmige Fallöffnung 34 sowie eine erfindungsgemäße Halteeinrichtung 70 zur Befestigung am Auffangbehälter 20 auf. Die Halteeinrichtung 70 besteht aus einem stegartigen Haltering, der am äußeren Rand einen Rasthaken 80 in Form eines hakenartigen Knicks nach innen bildet. Die Fangvorrichtung 30 ist über den etwas verdickten Rand 28 eines Auffangbehälters 20 geschoben und wird dort durch den Rasthaken 80, der die Verdickung 28 am Rand des Auffangbehälters 20 umgreift, festgehalten. Eine derartige Fangvorrichtung 30 kann alternativ auch auf ein Gewinde eines Auffangbehälters 20 geschraubt sein (nicht dargestellt).

Die dargestellte Ausführungsform der Fangvorrichtung 30 weist außerdem nach außen weisende Einsteckösen 38 auf, in die Einsteckhaken 57 von Dachhalterungen 53 eingesteckt werden können. Außerdem weist die Dachhalterung 53 eine weitgehend schlitzförmige Öffnung 58 auf, die im oberen Bereich erweitert ist. In diesen Bereich kann ein am Rand des Daches 50 angeordneter Vorsprung 51 eingreifen. Ein Absenken des Daches 50 und damit des Vorsprungs 51 in der Öffnung 58 bewirkt eine Fixierung der Anordnung. Das Dach 50 kann in dieser Ausführungsform senkrecht nach oben und unten geschoben werden bzw. einfach herausgenommen werden, um das Falleninnere bzw. die Innenseite des Daches 50 und damit das mittels einer Befestigungsklammer 60 an der Innenseite des Daches 50 befestigte, in diesem Fall kapselförmige Insektenlockmittel 62 leicht zugänglich zu machen. Durch den oberen Bereich der Öffnung 58 kann eine Schnur, ein Draht o. ä. geführt werden, um die Falle 10 aufzuhängen.

Eine erfindungsgemäße Dachhalterung 53 ist in Fig. 3 dargestellt. Neben dem Einsteckhaken 57 weist die Dachhalterung 53 eine weitgehend schlitzförmige Öffnung 58 auf, die im oberen Bereich erweitert ist, und in den ein Vorsprung 51 eines Daches 50 eingreifen kann.

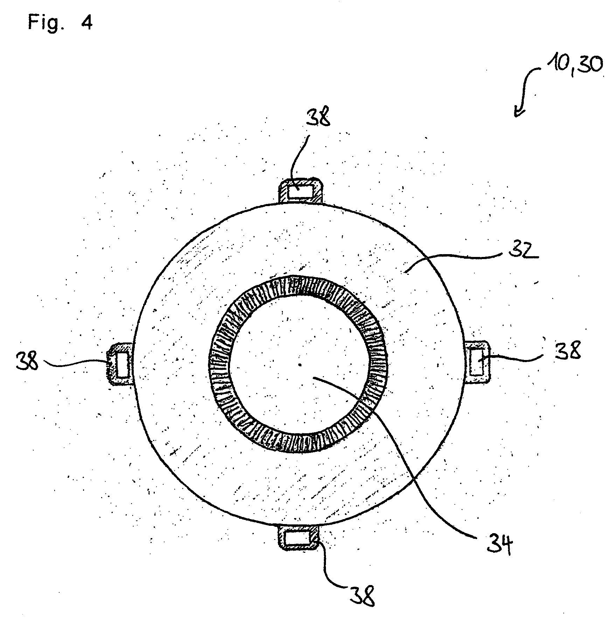

In Fig. 4 ist eine Draufsicht der Insektenfalle 10 nach Fig. 2 ohne Dach 50 und ohne Dachhalterungen 53 skizziert. In der Mitte der hier sichtbaren Fangvorrichtung 30 befindet sich die trichterförmige Fallöffnung 34. Am Rand des an seiner Oberseite eben gestalteten Außenbereiches 32 der Fangvorrichtung 30 befinden sich vier Einsteckösen 38, in die jeweils eine Dachhalterung 53 gemäß Fig. 3 eingesteckt werden kann.

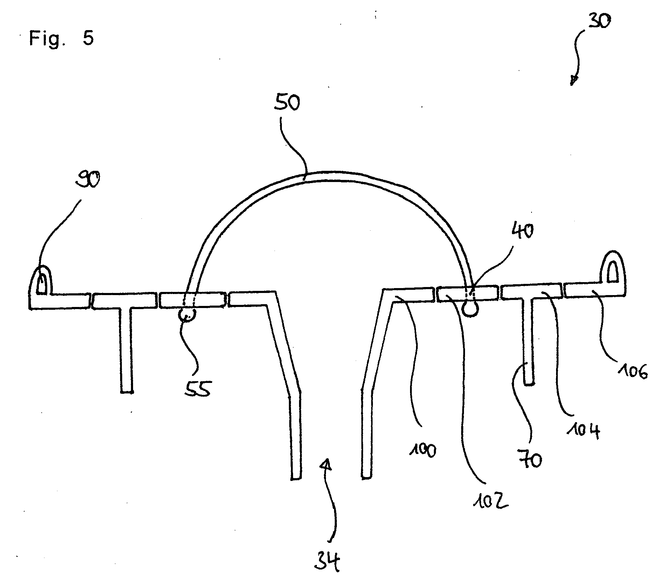

Fig. 5 zeigt eine schematische Querschnittdarstellung einer erfindungsgemäßen Fangvorrichtung 30, die nach Baukastenprinzip aufgebaut ist. Im dargestellten Beispiel setzt sich die Fangvorrichtung aus vier konzentrischen Ringbauteilen 100 bis 106 zusammen. Dabei korrespondieren die jeweiligen Innendurchmesser der Ringe mit den Außendurchmessern der jeweils nächst kleineren Ringe. Die vier Bauteile 100 bis 106 können somit ineinander gesteckt werden und bilden gemeinsam eine erfindungsgemäße Fangvorrichtung 30.

Das in der Mitte angeordnete Bauteil 100 weist den kleinsten Durchmesser auf und trägt als funktionellen Anteil die Fallöffnung 34. Die Fallöffnung 34 ist im dargestellten Beispiel zunächst trichterförmig gestaltet, geht dann im unteren Teil aber in eine zylinderförmige Öffnung über, was ein Hineinfallen von Insekten fördert.

Das nächst größere, ringförmige Bauteil 102 weist Durchbrüche 40 auf, in die die verdickten Ränder 55 des in diesem Fall verformbaren, bspw. aus einem verformbaren Kunststoff gefertigten Daches 50 eingesteckt werden können. Das Dach 50 liegt in diesem Fall weitgehend halbzylindrisch über der Fallöffnung 34.

Das nächst größere, ringförmige Bauteil 104 trägt die Halteeinrichtung 70 zur Befestigung der gesamten Fangvorrichtung 30 an einem Auffangbehälter 20. Die Halteeinrichtung 70 wird durch einen einfachen Haltering gebildet.

Das äußerste und letzte Bauteil 106 ist ebenfalls ringförmig ausgebildet Es trägt ösenförmige Aufhängevorrichtungen 90, an denen eine Schnur, ein Draht o. ä. zur Aufhängung der gesamten Insektenfalle 10 befestigt werden kann.

Auf die beschriebene Weise können durch eine Vielzahl unterschiedlicher Bauteile, bspw. mit unterschiedlichen Haltevorrichtungen für Auffangbehälter unterschiedlicher Größen und Formen, unterschiedlichen Befestigungseinrichtungen zur Befestigung unterschiedlicher Dächer oder unterschiedlicher Insektenlockmittel, oder unterschiedlichen Aufhängevorrichtungen zur Aufhängung bzw. Befestigung der gesamten Falle, unendlich viele Varianten von erfindungsgemäßen Insektenfallen erzeugt werden, die individuellen Wünschen und Anforderungen angepasst werden können. Die Bauteile können auch durch Spann-, Schraub- oder sonstige Befestigungsmechanismen miteinander verbunden werden.

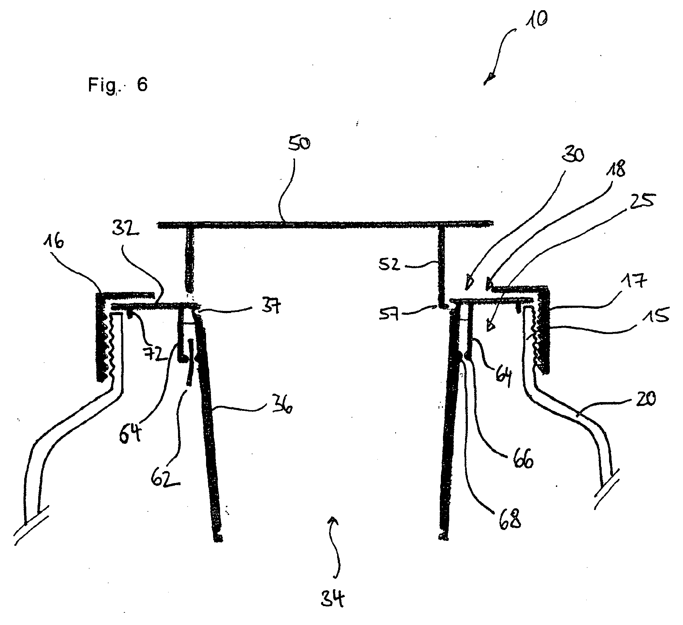

Fig. 6 zeigt eine schematische Querschnittdarstellung einer weiteren alternativen Ausführungsform einer erfindungsgemäßen Insektenfalle 10. Die Fangvorrichtung 30 weist wiederum eine trichterförmige Fallöffnung 34 auf. An der Oberkante der Fallöffnung 34 ist in die Seitenwand der Fallöffnung 36 eine Ringnut 37 eingebracht, in die ein am unteren Ende eines Abstandhalters 52 befindlicher Rasthaken 57 eines Daches 50 einrasten kann, wodurch das Dach 50 an der Fangvorrichtung 30 befestigt wird.

Die Fangvorrichtung 30 wird mit ihrem weitgehend planen Außenbereich 32 auf die freie Öffnung 25 eines mit einem Gewindehals 15 ausgestatteten und mit einem Schraubdeckel 16, der ein entsprechendes Gegengewinde 17 aufweist, verschließbaren Auffangbehälters 20 aufgelegt und anschließend durch Aufschrauben des Deckels 16 fixiert. Der Haltesteg 72 dient in diesem Fall als Zentrierungshilfe bzw. verhindert ein Abrutschen der Fangvorrichtung 30 von der Öffnung 25 des Auffangbehälters 20 bei nicht aufgeschraubtem Deckel 16. In den Schraubdeckel 16 ist eine genügend große Öffnung 18 eingebracht, bspw. durch Ausstanzen, Ausschneiden oder einen anderen Vorgang, so dass die Fallöffnung 34 und eventuell vorhandene weitere Funktionsteile der Fangvorrichtung 30 zugänglich sind.

Mit geringem Abstand zur Fallöffnung 34 sind mehrere ins Falleninnere weisende Haltezungen 64 an der Innenseite des weitgehend planen Außenbereichs 32 der Fangvorrichtung 30 angeordnet. An ihrem unteren, am weitesten in den Auffangbehälter 20 hinein ragenden Ende weisen die Haltezungen 64 jeweils Haltenasen 66 in Form von Verdickungen auf. Gegenüber einer jeden dieser Haltenasen 66 ist an der Innenseite eines Seitenwandabschnittes 36 der Fallöffnung 34 jeweils eine weitere Verdickung 68 angeordnet. Durch die Flexibilität und Elastizität der Haltezungen 64 können bspw. plättchen-, hütchen- oder kapselförmige Insektenlockmittel 62 zwischen die beiden Verdickungen 66, 68 eingeschoben und dort festgehalten werden.

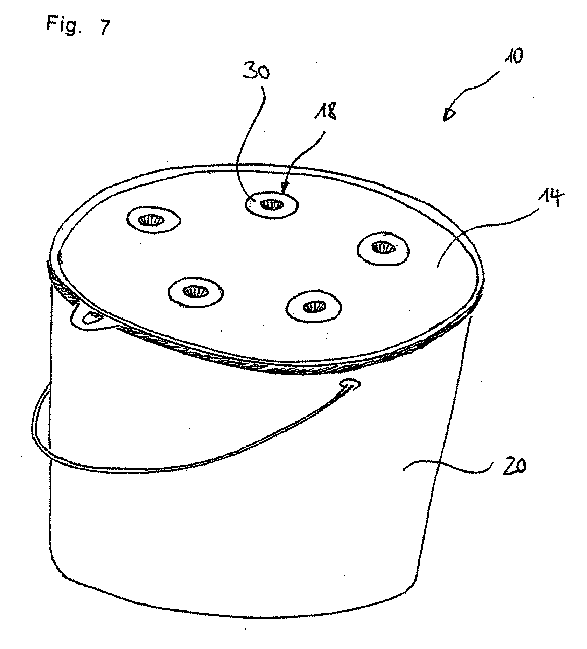

Fig. 7 zeigt eine Perspektivenansicht einer erfindungsgemäßen Nutzung von erfindungsgemäßen Fangvorrichtungen 30. Als Auffangbehälter 20 dient in diesem Fall ein großer Eimer, bspw. ein leerer Wandfarbeimer. In den großflächigen Deckel 14 dieses Eimers, sind fünf Öffnungen 18 eingebracht, bspw. durch Ausstanzen, Ausschneiden oder einen anderen Vorgang. In jede dieser Öffnungen 18 ist jeweils eine erfindungsgemäße Fangvorrichtung 30 eingebracht. Es ist denkbar, auch eine andere Anzahl erfindungsgemäßer Fangvorrichtungen 30 in eine großflächige Abdeckung eines großen Auffangbehälters 20 einzubringen. Diese Anordnung ist vor allem vorteilhaft, wenn ein großer Insektenbefall vorliegt oder wenn eine häufige Überprüfung der Falle bzw. ein Leeren oder Auswechseln des Aufnahmebehälters über eine längere Zeit hinweg nicht sichergestellt werden kann.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein. Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

### Bezugszeichenliste

- 10: Insektenfalle
- 14: Abdeckung
- 15: Gewindehals
- 16: Schraubdeckel
- 17: Gegengewinde
- 18: Öffnung in der Abdeckung
- 20: Auffangbehälter
- 22: Flüssigkeit
- 24: gefangenes Insekt
- 25: Öffnung im Auffangbehälter
- 26: Öffnungshals
- 28: verdickter Rand der Öffnung im Auffangbehälter
- 30: Fangvorrichtung
- 32: weitgehend planer Außenbereich
- 34: Fallöffnung
- 36: Seitenwand der Fallöffnung
- 37: Ringnut
- 38: Einsteckösen
- 40: Durchbruch
- 50: Dach
- 51: Vorsprung
- 52: Abstandhalter
- 53: Dachhalterung
- 54: Klappvorrichtung
- 55: Verdickung
- 56: Haltenase
- 57: Einsteckhaken der Dachhalterung
- 58: Öffnung in Dachhalterung
- 60: Befestigungseinrichtung für Insektenlockmittel
- 62: Insektenlockmittel
- 64: Haltezunge
- 66: Haltenase
- 68: Verdickung
- 70: Halteeinrichtung
- 72: Haltesteg
- 74: Haltenase
- 76: äußerer Haltering
- 78: innerer Haltering
- 80: Rasthaken
- 90: Aufhängevorrichtung
- 100: Ringbauteil 1
- 102: Ringbauteil 2
- 104: Ringbauteil 3
- 106: Ringbauteil 4

## Patentansprüche

1. Falle (10) für Insekten und andere Klein- und Kleinstlebewesen, insbesondere zum Fangen von Fluginsekten, umfassend einen Auffangbehälter (20) zur Aufnahme gefangener Insekten (24) und wenigstens eine Fangvorrichtung (30) mit einer Fallöffnung (34), die ins Innere des Auffangbehälters (20) hinein ragende Seitenwandabschnitte (36) aufweist, durch die zu fangende und/oder angelockte Insekten vorzugsweise in den Auffangbehälter (20) hinein, jedoch nicht wieder hinaus gelangen können, mit wenigstens einer Befestigungseinrichtung (60) zur optionalen Anbringung eines Insektenlockmittels (62) und mit wenigstens einer Halteeinrichtung (70) zur Anbringung der wenigstens einen Fangvorrichtung (30) an dem Auffangbehälter (20), **dadurch gekennzeichnet, dass** die wenigstens eine Halteeinrichtung (70) der wenigstens einen Fangvorrichtung (30) an einer Unterseite eines weitgehend ebenen Außenbereiches (32) der wenigstens einen Fangvorrichtung (30) angeordnet ist und wenigstens einen mit wenigstens einer Öffnung (25) des Auffangbehälters (20) korrespondierenden stegartigen Vorsprung (72) aufweist.

2. Falle nach Anspruch 1, **dadurch gekennzeichnet, dass** die wenigstens eine Halteeinrichtung (70) durch wenigstens einen ununterbrochenen Haltesteg (72) gebildet ist.

3. Falle nach Anspruch 2, **dadurch gekennzeichnet, dass** der wenigstens eine ununterbrochene Haltesteg (72) als Haltering (76, 78) ausgebildet ist.

4. Falle nach Anspruch 1, **dadurch gekennzeichnet, dass** die wenigstens eine Halteeinrichtung (70) durch wenigstens zwei auf einer Kreisbahn oder auf einer anders geformten Bahn liegende Haltestege (72) gebildet ist.

5. Falle nach einem der voranstehenden Ansprüche, **dadurch gekennzeichnet, dass** die wenigstens eine Halteeinrichtung (70) in ihrer Form und Größe mit wenigstens einer Öffnung (25) im Auffangbehälter (20) korrespondiert.

6. Falle nach einem der voranstehenden Ansprüche, **dadurch gekennzeichnet, dass** der wenigstens eine Haltesteg (72) eine Befestigungseinrichtung aufweist.

7. Falle nach Anspruch 6, **dadurch gekennzeichnet, dass** die Befestigungseinrichtung an der Unterkante des Haltesteges (72) angeordnet ist und durch eine Haltenase (74) und/oder einen Rasthaken (80) und/oder einen Gewindeabschnitt gebildet ist.

8. Falle nach einem der voranstehenden Ansprüche, **dadurch gekennzeichnet, dass** an der wenigstens einen Fangvorrichtung (30) mehrere Halteeinrichtungen (70; 76, 78) weitgehend konzentrisch angeordnet sind.

9. Falle nach Anspruch 8, **dadurch gekennzeichnet, dass** die sich die Tiefe der weitgehend konzentrisch angeordneten Halteeinrichtungen (70; 76, 78) von außen nach innen stufenweise verändert.

10. Falle (10), insbesondere zum Fangen von Fluginsekten, umfassend einen Auffangbehälter (20) zur Aufnahme gefangener Insekten (24) und wenigstens eine Fangvorrichtung (30) mit einer Fallöffnung (34), die ins Innere des Auffangbehälters (20) hinein ragende Seitenwandabschnitte (36) aufweist, durch die zu fangende und/oder angelockte Insekten vorzugsweise in den Auffangbehälter (20) hinein, jedoch nicht wieder hinaus gelangen können, mit wenigstens einer Befestigungseinrichtung (60) zur optionalen Anbringung eines Insektenlockmittels (62), **dadurch gekennzeichnet, dass** die wenigstens eine Fangvorrichtung (30) in wenigstens eine korrespondierende Öffnung (25) des Auffangbehälters (20) einsetzbar bzw. auf wenigstens eine korrespondierende Öffnung (25) des Auffangbehälters (20) aufsetzbar und mittels einer Abdeckung (14), die eine Öffnung (18) aufweist, fixierbar ist.

11. Falle nach einem der voranstehenden Ansprüche, **dadurch gekennzeichnet, dass** die wenigstens eine Fangvorrichtung (30) in wenigstens eine Öffnung (25) an einer Deckfläche oder einer Seitenfläche oder einer Bodenfläche des Auffangbehälters (20) einsetzbar bzw. auf wenigstens einen Rand einer Öffnung (25) an einer Deckfläche oder einer Seitenfläche oder einer Bodenfläche des Auffangbehälters (20) aufsetzbar ist.

12. Falle nach einem der voranstehenden Ansprüche, **dadurch gekennzeichnet, dass** die wenigstens eine Fangvorrichtung (30) in wenigstens eine Öffnung (18) in einer Abdeckung (14) des Auffangbehälters (20) einsetzbar bzw. auf wenigstens einen Rand einer Öffnung (18) in einer Abdeckung (14) des Auffangbehälters (20) aufsetzbar ist.

13. Falle nach einem der voranstehenden Ansprüche, **dadurch gekennzeichnet, dass** die wenigstens eine Fangvorrichtung (30) von außen in wenigstens eine Öffnung (18, 25) im Auffangbehälter (20) oder in einer Abdeckung (14) des Auffangbehälters (20) einsetzbar ist.

14. Falle nach einem der voranstehenden Ansprüche, **dadurch gekennzeichnet, dass** die wenigstens eine Fangvorrichtung (30) von innen in wenigstens eine Öffnung (18, 25) im Auffangbehälter (20) oder in einer Abdeckung (14) des Auffangbehälters (20) einsetzbar ist.

15. Falle nach einem der voranstehenden Ansprüche, **dadurch gekennzeichnet, dass** die wenigstens eine Fangvorrichtung (30) in wenigstens einer Öffnung (25) im Auffangbehälter (20) oder in einer Öffnung (18) in einer Abdeckung (14) des Auffangbehälters (20) befestigbar ist.

16. Falle nach einem der voranstehenden Ansprüche, **dadurch gekennzeichnet, dass** die wenigstens eine Fangvorrichtung (30) klappbar oder kippbar oder verformbar an einer Öffnung (25) im Auffangbehälter (20) oder an einer Öffnung (18) in einer Abdeckung (14) des Auffangbehälters (20) befestigbar ist.

17. Falle nach einem der voranstehenden Ansprüche, **dadurch gekennzeichnet, dass** die wenigstens eine Fangvorrichtung (30) an einer Unterseite wenigstens eine Vorrichtung zur Befestigung (60) von Insektenlockmittel (62) aufweist.

18. Falle nach Anspruch 17, **dadurch gekennzeichnet, dass** die wenigstens eine Befestigungsvorrichtung (60) für Insektenlockmittel (62) an der Unterseite des weitgehend planen Außenbereichs (32) der wenigstens einen Fangvorrichtung (30) angeordnet ist.

19. Falle nach Anspruch 17, **dadurch gekennzeichnet, dass** die wenigstens eine Befestigungsvorrichtung (60) für Insektenlockmittel (62) an der Innenseite einer Seitenwandfläche (36) der Fallöffnung (34) der wenigstens einen Fangvorrichtung (30) angeordnet ist.

20. Falle nach einem der voranstehenden Ansprüche **dadurch gekennzeichnet, dass** die wenigstens eine Befestigungsvorrichtung (60) für Insektenlockmittel (62) an einer Innenseite des Auffangbehälters (20) angeordnet ist.

21. Falle nach einem der Ansprüche 17 bis 20, **dadurch gekennzeichnet, dass** die wenigstens eine Befestigungsvorrichtung (60) für Insektenlockmittel (62) durch eine Klammer oder einen Klips oder eine Spange gebildet ist.

22. Falle nach einem der Ansprüche 17 bis 20, **dadurch gekennzeichnet, dass** die wenigstens eine Befestigungsvorrichtung (60) für Insektenlockmittel (62) durch wenigstens eine Haltezunge (64) gebildet ist.

23. Falle nach Anspruch 22, **dadurch gekennzeichnet, dass** die wenigstens eine Haltezunge (64) eine Haltenase (66) zum Festklemmen von Insektenlockmittel (62) aufweist.

24. Falle nach einem der voranstehenden Ansprüche, **dadurch gekennzeichnet, dass** der weitgehend plane Außenbereich (32) der wenigstens einen Fangvorrichtung (30) wenigstens einen Durchbruch und/oder wenigstens eine Einkerbung aufweist.

25. Falle nach einem der voranstehenden Ansprüche, **dadurch gekennzeichnet, dass** eine Seitenwand (36) der Fallöffnung (34) der wenigstens einen Fangvorrichtung (30) wenigstens einen runden und/oder ovalen und/oder schlitzförmigen Durchbruch aufweist.

26. Falle nach einem der voranstehenden Ansprüche, **dadurch gekennzeichnet, dass** die Innenfläche einer Seitenwand (36) der Fallöffnung (34) der wenigstens einen Fangvorrichtung (30) eine Beschichtung aufweist.

27. Falle nach einem der voranstehenden Ansprüche, **dadurch gekennzeichnet, dass** eine Seitenwand (36) der Fallöffnung (34) der wenigstens einen Fangvorrichtung (30) eine Wölbung aufweist.

28. Falle nach einem der voranstehenden Ansprüche, **dadurch gekennzeichnet, dass** die Fangvorrichtung (30) an einer Oberseite Befestigungseinrichtungen für Zusatzteile aufweist.

29. Falle nach Anspruch 28, **dadurch gekennzeichnet, dass** die wenigstens eine Fangvorrichtung (30) an einer Oberfläche eine Befestigungseinrichtung (53) für ein Dach (50) aufweist.

30. Falle nach Anspruch 29, **dadurch gekennzeichnet, dass** das Dach (50) lösbar mit der Fangvorrichtung (30) verbindbar ist.

31. Falle nach Anspruch 29 oder 30, **dadurch gekennzeichnet, dass** das Dach (50) klappbar oder kippbar oder verformbar oder verschiebbar mit der Fangvorrichtung (30) verbindbar ist.

32. Falle nach einem der Ansprüche 29 bis 31, **dadurch gekennzeichnet, dass** die das Dach (50) an einer Innenseite eine Vorrichtung (60) zur Befestigung von Insektenlockmittel (62) aufweist.

33. Falle nach Anspruch 28, **dadurch gekennzeichnet, dass** die wenigstens eine Fangvorrichtung (30) an einer Oberfläche eine Befestigungseinrichtung für eine Aufhängevorrichtung (90) aufweist.

34. Falle nach einem der voranstehenden Ansprüche, **dadurch gekennzeichnet, dass** die wenigstens eine Fangvorrichtung (30) aus mehreren Einzelbauteilen (100, 102, 104, 106) zusammen fügbar ist.

35. Falle nach Anspruch 34, **dadurch gekennzeichnet, dass** die Einzelbauteile (100, 102, 104, 106) unterschiedliche Funktionselemente tragen.

36. Falle nach Anspruch 34 oder 35, **dadurch gekennzeichnet, dass** die Einzelbauteile (100, 102, 104, 106) im Wesentlichen konzentrisch ineinander steckbar und/oder ineinander schraubbar und/oder ineinander verrastbar sind.

37. Falle nach einem der Ansprüche 34 bis 36, **dadurch gekennzeichnet, dass** die Einzelbauteile (100, 102, 104, 106) konzentrische Ringe mit unterschiedlichen Durchmessern darstellen.

38. Falle nach einem der Ansprüche 35 bis 37, **dadurch gekennzeichnet, dass** die Funktionselemente lösbar mit den Einzelbauteilen (100, 102, 104, 106) verbunden sind.

39. Falle nach einem der voranstehenden Ansprüche, **dadurch gekennzeichnet, dass** die wenigstens eine Fangvorrichtung (30) mit einer runden und/oder quadratischen und/oder dreieckigen und/oder ovalen Öffnung (25) im Auffangbehälter (20) kompatibel ist.

40. Falle nach einem der voranstehenden Ansprüche, **dadurch gekennzeichnet, dass** die Fallöffnung (34) konisch und/oder zylindrisch und/oder pyramidenstumpf und/oder oval und/oder sich verjüngend ausgebildet ist.

41. Falle nach einem der voranstehenden Ansprüche, **dadurch gekennzeichnet, dass** sie alternativ durch Hängen, Stellen, Versenken oder Wandbefestigung eingesetzt werden kann.

42. Falle nach einem der voranstehenden Ansprüche, **gekennzeichnet durch** wenigstens einen geraden Oberflächenabschnitt zur Anbringung einer Befestigungseinrichtung.

43. Falle nach Anspruch 42, **dadurch gekennzeichnet, dass** die Befestigungseinrichtung Winkel und/oder Haken und/oder Ösen und/oder Klettband umfasst.

44. Falle nach einem der voranstehenden Ansprüche, **dadurch gekennzeichnet, dass** die Fangvorrichtung (30) und/oder der Auffangbehälter (20) aus durchsichtigem, klarem oder durchsichtigem, trübem oder undurchsichtigem und/oder eingefärbtem Material gefertigt ist.

45. Falle nach einem der voranstehenden Ansprüche, **dadurch gekennzeichnet, dass** der Auffangbehälter (20) zur Verdeckung gefangener Insekten (24) lackiert und/oder lackierbar und/oder bemalbar und/oder beklebbar ist.

46. Falle nach einem der voranstehenden Ansprüche, **dadurch gekennzeichnet, dass** das Falleninnere bzw. Teile des Falleninneren mit einer Beschichtung zum Abgleiten von gefangenen Insekten (24) versehen ist.

47. Falle nach einem der voranstehenden Ansprüche, **dadurch gekennzeichnet, dass** die der Rand der Fallöffnung (34) bzw. die Fallöffnung (34) eine beliebige Form aufweist.
